# EUROPÄISCHE PATENTSCHRIFT

(11) **EP 3 548 358 B1**
(45) Veröffentlichungstag und Bekanntmachung des Hinweises auf die Patenterteilung: **15.07.2020**
(21) Anmeldenummer: 17804194.3
(22) Anmeldetag: 27.11.2017
(51) Int. Cl.: B61L 27/00, B61L 25/02, B61L 23/00, B60M 3/04

(54) **VERFAHREN ZUR NOTABSCHALTUNG EINER VERSORGUNGSSPANNUNG ODER FAHRSTROMVERSORGUNG AUF EINER ELEKTRIFIZIERTEN STRECKE ODER EINEM ELEKTRIFIZIERTEN STRECKENABSCHNITT FÜR SCHIENENFAHRZEUGE**
METHOD FOR EMERGENCY SHUTDOWN OF A SUPPLY VOLTAGE OR TRACTION POWER SUPPLY ON AN ELECTRIFIED LINE OR AN ELECTRIFIED LINE SECTION FOR RAIL VEHICLES
PROCÉDÉ DE COUPURE D'URGENCE D'UNE TENSION D'ALIMENTATION OU D'UNE ALIMENTATION EN COURANT DE TRACTION SUR UNE LIGNE ÉLECTRIFIÉE OU UN TRONÇON DE LIGNE ÉLECTRIFIÉ POUR VÉHICULES FERROVIAIRES

(30) Priorität: 29.11.2016 DE 102016223623
(43) Veröffentlichungstag der Anmeldung: 09.10.2019
(73) Patentinhaber: Bombardier Transportation GmbH, 10785 Berlin (DE)
(72) Erfinder: WESTPHAL, Dirk, 68199 Mannheim (DE)
(74) Vertreter: Patentanwälte Bressel und Partner mbB
(86) Internationale Anmeldenummer: PCT/EP2017/080514
(87) Internationale Veröffentlichungsnummer: WO 2018/099857

(56) Entgegenhaltungen:
- EP-A1- 2 305 534
- WO-A1-2015/043967
- DE-A1- 3 626 960
- DE-A1-102010 002 694

## Beschreibung

Die Erfindung betrifft ein Verfahren zur Notabschaltung einer Versorgungsspannung oder Fahrstromversorgung auf einem elektrifizierten Strecke oder einem elektrifizierten Streckenabschnitt für Schienenfahrzeuge, ein Schienenfahrzeug mit einer Notsignal-Sendeeinrichtung zur Notabschaltung einer Versorgungsspannung oder Fahrstromversorgung auf einem elektrifizierten Strecke oder einem elektrifizierten Streckenabschnitt für das Schienenfahrzeug sowie ein System zur Notabschaltung einer Versorgungsspannung oder Fahrstromversorgung auf einem elektrifizierten Strecke oder einem elektrifizierten Streckenabschnitt für Schienenfahrzeuge.

Schienenfahrzeuge werden in der Regel durch elektrischen Strom angetrieben. Dies kann über Stromschienen direkt oder über Oberleitungen realisiert werden, wobei der Stromkreis über die Schienen wieder geschlossen wird.

Vor allem im Fernverkehr hat sich die Stromversorgung über Oberleitungen durchgesetzt.

Es werden hierbei Ströme im Hochspannungsbereich über 10 kV eingesetzt. Daher kann es beispielsweise bei Nichteinhaltung von Sicherheitsabständen oder beim Reißen einer Oberleitung zu einem Stromüberschlag und zur Entstehung eines Lichtbogens kommen.

Bei der Entstehung eines Lichtbogens werden extrem hohe Temperaturen freigesetzt, die zu starken Verletzungen bei Menschen und zur Brandentstehungen im Schienenfahrzeug führen können. Daher sind besondere Sicherheitsmaßnahmen notwendig.

Befindet sich ein Schienenfahrzeug auf offener Strecke, ist eine genaue Positionsübertragung erforderlich, damit die Leitstelle den Schienenverkehr regeln und bei Notfällen Sicherheitskräfte vor Ort eingreifen können.

Die DE19544158A1 beschreibt eine Einrichtung zur Notruf- und Positionsübertragung aus einem Fahrzeug zu einer zentralen Leitstelle. Sie ermöglicht es Verkehrsträgern, insbesondere im Bereich der Personenbeförderung die genaue Position eines Fahrzeugs zu bestimmen bzw. die Daten zwischen dem Fahrzeug und einer zentralen Leitstelle auszutauschen.

Die Realisierung erfolgt durch die Ausstattung des Fahrzeugs mit Notruftastern, Sprechstellen und bei einem Schienenfahrzeug mit einem Radsensor, die mit einem Bordrechnersystem und einem Funkgerät gekoppelt sind. Die Positionsbestimmung erfolgt über Satellitenortung (GPS) unter Abgleich der Bordrechnerdaten und wird über den Betriebsfunk oder GSM zu einer zentralen Leitstelle übertragen. Dort werden die Daten in einem Leitrechner ausgewertet.

Mit diesem System kann lediglich eine Notfallmeldung an eine zentrale Leitstelle übertragen werden.

Eine Unterbrechung der Stromversorgung des Schienenfahrzeugs kann in einigen Fällen von Vorteil sein.

So kann es beispielsweise an Systemtrennstellen von einander ablösenden Stromsystemen der Bahnstromversorgung zu Kurzschlüssen kommen, wenn die Stromzufuhr an diesen Stellen nicht unterbrochen wird.

Die EP2266834A1 beschreibt dazu ein Steuersystem und -verfahren, welches die geographische Lage von neutralen Abschnitten an Bord des Fahrzeugs speichert. Ein GPS-System am Fahrzeug bestimmt den geographischen Standort des Fahrzeugs. Ein Programm des Steuersystems bestimmt die Position des Fahrzeugs relativ zu der Position des neutralen Abschnitts aus dem Speicher des GPS. Weiter umfasst es eine Steuerung um die Leitungsunterbrechung des Fahrzeugs offen zu halten, so lange der Stromabnehmer den neutralen Abschnitt passiert.

Damit kann die Einspeisung des Bahnstromes in das Schienenfahrzeug abhängig von der Position des Fahrzeugs auf der Strecke unterbrochen werden. Die Stromversorgung in der Oberleitung bleibt bestehen.

Die DE602004001036T2 beschreibt ein Versorgungssystem für eine Oberleitung, mit mehreren Versorgungsstationen für die Oberleitung, wobei jede Versorgungsstation zwischen zwei Abschnitten der Oberleitung angeschlossen ist, die in Fahrtrichtung vor und hinter ihr liegen, und wobei jede Versorgungsstation als Antwort auf Steuersignale zur Unterbrechung der Versorgung zu mindestens einem der Abschnitte der Oberleitung in Fahrtrichtung vor und hinter ihr geeignet ist, an welchem sie angeschlossen ist. Das System weist zumindest einen Generator auf, der zur Aussendung der Steuersignale mittels der Oberleitung geeignet ist, und jede Station weist einen Empfänger auf, der zum Empfangen der mittels der Oberleitung ausgesendeten Steuersignale und zum Steuern der Unterbrechung der Versorgung von zumindest einem der Abschnitte der Oberleitung als Antwort auf den zumindest eines dieser Steuersignale geeignet ist.

Hierbei wird die Fahrstromversorgung über Steuersignale auf der Oberleitung geregelt.

Die Fahrstromversorgung kann nicht bei Notfällen vor Ort ausgeschaltet werden.
Bricht die Verbindung mit der Oberleitung ab, wie bei einem Reißen der Oberleitung, ist keine Abschaltung der Stromversorgung mehr möglich.

Die DE 3626960 A1 offenbart eine Abschaltvorrichtung für Fahrstromleitungen für in einer Spurführungstrasse spurgeführte Fahrzeuge. Um eine derartige Abschaltvorrichtung durch den Fahrzeugführer in jedem beliebigen Punkt der Fahrstrecke fernauslösbar auszubilden, sieht die Erfindung vor, dass entlang der Spurführungstrasse in Armreichweite des Fahrzeugführers zwei miteinander nicht in Berührung stehende blanke Drähte verlaufen, die zu einem zentral angeordneten ortsfesten Relais zum Abschalten der Fahrstromleitungen führen und an die über ein flexibles Kabel eine im Fahrzeug installierte Spannungsquelle vorübergehend anklemmbar ist.

Die EP 2 305 534 A1 offenbart eine Anordnung und ein Verfahren für ein fahrerloses Transportmittel zur Aktivierung eines sicheren Betriebszustandes, wobei der Fahrweg des fahrerlosen Transportmittels mehrere Weg-Segmente umfasst und das Bedienelement oder der Sensor zumindest einem der Wegsegmente zugeordnet ist. Dabei wird eine Meldung zur Aktivierung des sicheren Betriebszustandes von dem Bedienelement oder dem Sensor zu einer digitalen Steuerung des fahrerlosen Transportmittels übermittelt, wobei die digitale Steuerung mittels eines redundanten Positionserfassungssystems die zum Zeitpunkt der Verarbeitung der Meldung vorliegende Position des fahrerlosen Transportmittels oder das zu diesem Zeitpunkt von dem fahrerlosen Transportmittel befahrene Weg-Segment erfasst und mit der einer der jeweils zu verarbeitenden Meldung vorliegenden Ortinformation vergleicht und im Falle einer Übereinstimmung den sicheren Betriebszustand für das fahrerlose Transportmittel aktiviert.

Aufgabe der Erfindung ist es daher, eine verbesserte Möglichkeit bereitzustellen, die Versorgungsspannung oder Fahrstromversorgung auf einer elektrifizierten Strecke oder auf einem elektrifizierten Streckenabschnitt für Schienenfahrzeuge abzustellen.

Erfindungsgemäß wird die Aufgabe anhand eines Verfahrens nach Anspruch 1, eines Schienenfahrzeugs nach Anspruch 9 und eines Systems nach Anspruch 11 gelöst. Vorteilhafte Weiterbildungen sind in den Unteransprüchen angegeben.

Die Erfindung betrifft im Einzelnen ein Verfahren zur Notabschaltung einer Versorgungsspannung oder Fahrstromversorgung auf einem elektrifizierten Strecke oder einem elektrifizierten Streckenabschnitt für Schienenfahrzeuge, aufweisend die Schritte:
- Senden eines Signals von einem auf der Strecke befindlichen Schienenfahrzeug oder von einer externen, mobilen Sendeeinrichtung an eine Empfangseinrichtung,
   wobei das Signal eine Information zur erwünschten Abschaltung der Versorgungsspannung oder Fahrstromversorgung auf der Strecke oder einem Streckenabschnitt,
   eine Information über den Absender und
   eine Information über die aktuelle Position des Schienenfahrzeugs oder der mobilen Sendeeinrichtung enthält,
- Übermitteln des Signals von der Empfangseinrichtung an eine Betriebsstelle,
- Abschalten der Versorgungsspannung oder Fahrstromversorgung auf der Strecke oder dem Streckenabschnitt in der Betriebsstelle.

Die Erfindung kann insbesondere für Systeme mit Oberleitungen angewandt werden oder für Systeme mit Stromschienen.

Vorteilhaft an der Erfindung ist die Möglichkeit der schnellen Notabschaltung der Versorgungsspannung oder Fahrstromversorgung auf elektrifizierten Strecken oder Streckenabschnitten direkt vor Ort aus dem Schienenfahrzeug heraus oder durch Rettu ngskräfte.

Dadurch kann in einem Notfall sofort reagiert werden. Da es durch die hohen Spannungen bei kleinen Verzögerungen, beispielsweise durch eine Sprachmeldung per Funk an die Betriebsstelle, zu einer kritischen Zeitverzögerung kommen kann, können mit dem erfindungsgemäßen Verfahren, Schienenfahrzeug und System Katastrophen besser abgewendet werden.

Ferner können auch Rettungskräfte die Notabschaltung der Versorgungsspannung oder Fahrstromversorgung von außerhalb vornehmen, wenn es dem Fahrzeugführer nicht mehr möglich ist.

Zudem kann der Absender eine sichere Information erhalten, wann die Versorgungsspannung oder Fahrstromversorgung abgeschaltet ist und mit Rettungs- oder Wartungsarbeiten begonnen werden kann.

Das Signal kann über GSM übertragen werden. Dies hat das den Vorteil, dass bereits bekannte Kommunikationswege genutzt werden können. Dies ist besonders vorteilhaft für ein Senden des Signals von einer externen, mobilen Sendeeinrichtung, wie beispielsweise für die Feuerwehr, die Polizei, oder weitere Rettungskräfte.

Das Signal wird vorzugsweise über Funk übertragen. In einer Ausführungsform kann das Signal insbesondere über Global System for Mobile Communications (GSM) übertragen werden.

Wir das Signal aus dem Schienenfahrzeug abgesendet, kann dies durch eine Sendeeinrichtung im Fahrzeug realisiert sein. Die Sendeeinrichtung kann mit einer Fahrzeugsteuerung verbunden oder ein Teil davon sein.

Wird das Signal durch eine externe, mobile Sendeeinrichtung abgesendet, kann dies durch ein Funkgerät oder durch ein Mobiltelefon realisiert sein.

Als Empfangseinrichtung ist jede für das Empfangen des gesendeten Signals geeignete Vorrichtung geeignet.

Die Information über den Absender kann eine Information über die Bedienperson, die Sendeeinrichtung und/oder das Schienenfahrzeug beinhalten. Vorzugsweise werden die Erkennungsdaten des Schienenfahrzeugs gesendet, womit dieses identifiziert werden kann.

In einer anderen Variante werden Erkennungsdaten oder Identifizierungsdaten einer mobilen Sendeeinrichtung gesendet.

Als Bedienpersonen kommen insbesondere der Fahrzeugführer, Mitglieder des Bordpersonals, des Wartungspersonals, der Feuerwehr, der Polizei, des THW oder weitere Rettungskräfte in Betracht. Die mobile Sendeeinrichtung kann von außerhalb des Schienenfahrzeugs betrieben werden, beispielsweise von Feuerwehr oder Hilfskräften.

Unter einer Betriebsstelle ist erfindungsgemäß die Stelle zu verstehen, die zur Abschaltung, Anschaltung einer Versorgungsspannung oder Fahrstromversorgung zuständig und autorisiert ist. Eine Betriebsstelle kann eine (Strecken)Leitstelle sein. Die Kommunikation mit der Betriebsstelle kann indirekt sein, beispielsweise über Zwischenstellen erfolgen, je nach Aufbau eines Kommunikationsnetzwerkes in der Bahn-Infrastruktur. Beispielsweise kann direkt eine Kommunikation mit einer Einspeisestelle aufgebaut werden, welche dann wiederum die Betriebsstelle, insbesondere eine Leitstelle, informiert.

Mit der aktuellen Position des Schienenfahrzeugs ist insbesondere eine geographische Position bezeichnet, beispielsweise in Längen- und Breitengrad.

Zur Bestimmung der aktuellen Position können Positionsdaten über ein im Schienenfahrzeug angebrachtes Positionsbestimmungssystem, vorzugsweise über ein Global Position System (GPS) im Schienenfahrzeug ermittelt werden.

Zusätzlich können Daten über einen Radsensor oder Wegimpulsgeber ermittelt werden. Über Kopplung von Daten aus Radsensor oder Wegimpulsgebermit zuletzt festgestellten GPS-Daten kann bei fehlendem Satellitenempfang die geographische Position bestimmt werden. Ein solches Verfahren ist beschrieben in DE19544158A1.

In einer anderen Ausführungsform wird die geographische Position mittels Kopplung der GPS-Daten mit Daten aus der Geschwindigkeitsberechnung des Schienenfahrzeugs ermittelt.

Die aktuelle Position kann auch durch die externe, mobile Sendeeinrichtung, oder bei einer solchen Sendeeinrichtung, über ein Positionsbestimmungssystem, vorzugsweise GPS bestimmt werden.

Vorzugsweise wird das Signal als Datentelegramm erstellt und versendet.

Die Versorgungsspannung oder Fahrstromversorgung kann auf der Strecke oder dem Streckenabschnitt in der Betriebsstelle abgeschaltet werden. Vorzugsweise wird die Versorgungsspannung oder Fahrstromversorgung auf dem Streckenabschnitt auf dem sich das Schienenfahrzeug befindet, abgeschaltet.

Eine Ausführungsform der Erfindung betrifft ein Verfahren, wobei das Schienenfahrzeug ein Bedienelement für ein Fahrpersonal des Schienenfahrzeugs und eine Signalerzeugungseinrichtung, die mit dem Bedienelement gekoppelt ist aufweist,
und das Verfahren weiterhin ein Betätigen des Bedienelements und Erzeugen des Signals in der Signalerzeugungseinrichtung aufweist.

Das Bedienelement kann ein Tastelement, beispielsweise ein Schalter, ein Knopf oder ein Hebel sein, vorzugsweise handelt es sich um einen besonders gekennzeichneten oder beleuchteten Schalter. Besonders bevorzugt ist das Tastelement mit einer Schutzabdeckung versehen, um ein ungewolltes Betätigen zu vermeiden.

In einer vorzugsweisen Ausführungsform befindet sich das Bedienelement im Fahrerstand, insbesondere im Bedienpult des Schienenfahrzeugs.

In einer weiteren bevorzugten Ausführungsform ist die Signalerzeugungseinrichtung die Fahrzeugsteuerung oder ist in die Fahrzeugsteuerung integriert.

Eine andere Ausführungsform der Erfindung betrifft ein Verfahren wobei die mobile Sendeeinrichtung eine Computerprogrammapplikation aufweist, und das Verfahren weiterhin ein Betätigen der Computerprogrammapplikation und Erzeugen des Signals durch die Computerprogrammapplikation aufweist.

Dabei kann die mobile Sendeeinrichtung ein Funkgerät oder ein Mobiltelefon sein, wobei das Betätigen der Computerprogrammapplikation durch den Bediener manuell durchgeführt wird.

Mit dieser Applikation kann das Signal oder Datentelegramm abgeschickt werden.

In einer bevorzugten Ausführungsform werden in der mobilen Sendeeinrichtung die konfigurierten Sender- und Orts-, vorzugsweise GPS-Ortsinformationen, zu einem Datentelegramm zusammengestellt und abgesendet.

In einer weiteren Ausführungsform der Erfindung kann in der Applikation der mobilen Sendeeinrichtung zusätzlich ein manueller Modus gewählt werden, in dem der abzuschaltende Abschnitt gewählt werden kann.

Die Computerprogrammapplikation kann insbesondere eine Android-Applikation oder Applikation für Geräte der Firma Apple, oder eine Windows-Applikation sein.

In einer anderen Ausführungsform weist das Verfahren ein Prüfen des Signals in einer Betriebsstelle auf Berechtigung des Absenders auf.

Zur Absicherung gegen unbefugten Zugriff können alle berechtigten Sender oder mobilen externen Sendeeinrichtungen bei der Empfangseinrichtung registriert werden, beispielsweise mit Identifikationsdaten, die bei der Kommunikation übermittelt werden können.
In diesem Fall führt nur ein Signal von einer registrierten oder autorisierten Sendeeinrichtung zur Notabschaltung der Versorgungsspannung oder Fahrstromversorgung auf der Strecke oder dem Streckenabschnitt.

In einer anderen erfindungsgemäßen Variante kann das Signal verschlüsselt oder anderweitig gesichert werden.

Es kann vorgesehen sein, dass nur entsprechend verschlüsselte oder gesicherte Signale zu einer Notabschaltung der Versorgungsspannung oder Fahrstromversorgung führen.

In einer weiteren Ausführungsform der Erfindung weist das Verfahren ein Senden eines Bestätigungssignals von der Betriebsstelle an den Absender auf, das eine Information zu der Abschaltung der Versorgungsspannung oder Fahrstromversorgung enthält.

So kann eine Streckensteuerung oder eine Betriebsstelle ein Signal, vorzugsweise ein Datentelegramm an den Absender oder die mobile Sendeeinrichtung zurücksenden, damit dieser die Information erhält, dass die Strecke abgeschaltet und gesichert ist.

Der Absender, insbesondere ein Fahrzeugführer oder Bediener der Rettungskräfte, kann eine Rückmeldung aus der Betriebsstelle erhalten und informiert werden, ob die Oberleitung abgeschaltet ist. Es kann hierzu ein gesichertes Signal aus der Betriebsstelle an das Fahrzeug an den Absender, insbesondere ein Fahrzeugführer oder Bediener der Rettungskräfte, gesendet werden. Dem Absender kann die Information gesichert angezeigt werden. Die Anzeige kann auf einem mobilen Gerät erfolgen.

Auf diese Weise können beispielsweise Feuerwehr, Polizei, Rettungskräfte oder auch Wartungspersonal den Status auslesen und mit eventuellen Maßnahmen oder Arbeiten beginnen, beziehungsweise der Zugführer oder das Bordpersonal sind über eine eventuelle Abschaltung der Strecke oder des Streckenabschnitts informiert.

Eine weitere Ausführungsvariante der Erfindung betrifft ein Verfahren, welches das Senden eines Informationssignals von der Betriebsstelle an zumindest ein weiteres auf der Strecke befindliches Schienenfahrzeug aufweist, das eine Information zu der Abschaltung der Versorgungsspannung oder Fahrstromversorgung enthält.

In einer nächsten Ausführungsvariante des Verfahrens ist die Empfangseinrichtung an der Strecke angeordnet. Mehrere Empfangseinrichtungen können an der Strecke vorhanden sein, vorzugsweise in definierten Abständen. Einem Streckenabschnitt können ein oder mehrere Empfangseinrichtungen zugeordnet sein.

In einer weiteren Ausführungsform kann das Abschalten der Versorgungsspannung oder Fahrstromversorgung in der Betriebsstelle automatisiert erfolgen. Es ist prinzipiell möglich, dass in der Betriebsstelle ein Abschalten, also ein manuelles Abschalten, durch eine Person, beispielsweise einen Fahrdienstleister erfolgt. Besonders vorteilhaft ist es aber, wenn ein abschalten automatisiert erfolgt, wie erwähnt.

Ein weiterer Gegenstand der Erfindung ist ein Schienenfahrzeug, aufweisend eine Notsignal-Sendeeinrichtung zur Notabschaltung einer Versorgungsspannung oder Fahrstromversorgung auf einer elektrifizierten Strecke oder einem elektrifizierten Streckenabschnitt für das Schienenfahrzeug, wobei die Notsignal-Sendeeinrichtung aufweist:
- ein Bedienelement für ein Fahrpersonal des Schienenfahrzeugs,
- eine Signalerzeugungseinrichtung, die mit dem Bedienelement gekoppelt ist dazu eingerichtet ist, bei Betätigung des Bedienelements ein Signal zu erzeugen, das eine Information zur erwünschten Abschaltung der Versorgungsspannung oder Fahrstromversorgung auf der Strecke oder dem Streckenabschnitt und eine Information über den Absender enthält,
- eine Sendeeinrichtung, die dazu eingerichtet ist, ein Signal aus der Signalerzeugungseinrichtung von dem Schienenfahrzeug aus zu versenden.

Ein Vorteil der Erfindung ist, dass ein Notruf von einem Fahrzeugführer mit Positionsinformation abgesetzt werden kann und Rettungsmaßnahmen beschleunigt werden können.

Das Signal kann weiterhin eine Information über die aktuelle Position des Schienenfahrzeugs enthalten.

Das erwähnte Signal ist bei Betätigung des Bedienelements automatisiert erzeugbar. Es bedarf somit keiner weiteren Tätigkeit des Bedieners. Nicht gemeint ist also von der Erfindung eine Funkdurchsage in Form eines Funksignals, worin ein Bediener verbal die genannten Informationen übermittelt.

Das Bedienelement kann ein Tastelement, beispielsweise ein Schalter, ein Knopf oder ein Hebel sein, vorzugsweise handelt es sich um einen beleuchteten Schalter. Besonders bevorzugt ist das Tastelement mit einer Schutzabdeckung versehen, um ein ungewolltes Betätigen zu vermeiden. Das Bedienelement kann auf einem berührungsempfindlichen Display ausgebildet sein (Touchscreen, Softkey). Diese Beispiele sind nicht beschränkend.

In einer vorzugsweisen Ausführungsform befindet sich das Bedienelement im Fahrerstand, insbesondere im Bedienpult des Schienenfahrzeugs.

In einer weiteren bevorzugten Ausführungsform ist die Signalerzeugungseinrichtung die Fahrzeugsteuerung oder ist in die Fahrzeugsteuerung integriert.

Das Signal wird vorzugsweise über Funk oder GSM übertragen.

Die Information über den Absender kann die Information über die Bedienperson und/oder das Schienenfahrzeug beinhalten. Vorzugsweise werden Erkennungsdaten des Schienenfahrzeugs gesendet, womit dieses identifiziert werden kann.

Mit der aktuellen Position des Schienenfahrzeugs ist die geographische Position bezeichnet.

Um die aktuelle Position zu bestimmen, kann das Schienenfahrzeug mit einem oder mehreren Positionsbestimmungssystemen ausgestattet sein. Vorzugsweise ist das Schienenfahrzeug mit einem Global Position System (GPS) ausgestattet und es können die GPS-Daten übermittelt werden.

In einer Ausführungsform ist das Schienenfahrzeug zusätzlich mit einem Radsensor oder Wegimpulsgeber ausgestattet und mit einem Bordrechner verbunden, um über Kopplung der Radsensorik-Daten mit den GPS-Daten bei fehlendem Satellitenempfang die geographische Position zu bestimmen.

In einer anderen Ausführungsform wird die geographische Position mittels Kopplung der GPS-Daten mit Daten aus der Geschwindigkeitsberechnung des Schienenfahrzeugs ermittelt. Dies geschieht vorzugsweise ergänzend, da GPS nicht ununterbrochen zur Verfügung steht.

Ebenfalls Gegenstand der Erfindung ist ein System zur Notabschaltung einer Versorgungsspannung oder Fahrstromversorgung auf einer elektrifizierten Strecke oder einem elektrifizierten Streckenabschnitt für Schienenfahrzeuge, aufweisend das erfindungsgemäße Schienenfahrzeug oder eine Schienenfahrzeug-externe, mobile Sendeeinrichtung, die dazu eingerichtet ist, ein Signal zu erzeugen, das eine Information zur erwünschten Abschaltung der Versorgungsspannung oder Fahrstromversorgung auf der Strecke oder dem Streckenabschnitt, eine Information über den Absender und eine Information über die aktuelle Position der mobilen Sendeeinrichtung enthält sowie zumindest eine Empfangseinrichtung, von der das Signal empfangbar und an eine Betriebsstelle weiterleitbar ist.

In obigem Schienenfahrzeug und System können jegliche gegenständliche Merkmale realisiert sein, in beliebiger Kombination, die zuvor anhand von erfindungsgemäßen Verfahren beschrieben wurden. Das Schienenfahrzeug und System können weiterhin zur Durchführung beschriebener Verfahrensmerkmale eingerichtet sein oder in einem erfindungsgemäßen Verfahren angewandt werden.

Vorzugsweise sind entlang der Strecke mehrere Empfangseinrichtungen vorhanden.

Die externe mobile Sendeeinrichtung kann ein Funkgerät oder ein mobiles Telefon, insbesondere ein Smartphone, oder ein Tablet PC sein. Auch diese Beispiele sind nicht beschränkend.

Bevorzugt ist die externe mobile Sendeeinrichtung mit einem Positionsbestimmungssystem, vorzugsweise GPS ausgestattet.

In einer Ausführungsform weist die mobile Sendeeinrichtung eine Computerprogrammapplikation auf.

Durch Betätigen des Funkgeräts oder der Computerprogrammapplikation kann das Signal, vorzugsweise ein Datentelegramm, insbesondere ein gesichertes Datentelegramm, erzeugt werden.

Das Betätigen der Computerprogrammapplikation durch den Bediener kann manuell durchgeführt werden. Ferner kann der Zustand bzw. Status der Strom- oder Spannungseinspeisung abgefragt bzw. angezeigt werden.

In einer bevorzugten Ausführungsform werden in der mobilen Sendeeinrichtung die konfigurierten Sender- und Orts-, vorzugsweise GPS-Ortsinformationen, zu einem Datentelegramm zusammengestellt und abgesendet.

In einer weiteren Ausführungsform der Erfindung kann in der Applikation der mobilen Sendeeinrichtung zusätzlich ein manueller Modus gewählt werden, in dem der abzuschaltende Abschnitt gewählt werden kann.

Die Information über den Absender kann die Information über die Bedienperson, die Sendeeinrichtung und/oder das Schienenfahrzeug beinhalten. Wenn möglich, können die Erkennungsdaten des Schienenfahrzeugs gesendet werden, womit dieses identifiziert werden kann. Als Bedienpersonen kommen insbesondere Mitglieder der Feuerwehr, des Wartungspersonals, der Polizei, des THW oder weitere Rettungskräfte in Betracht.

In einer besonderen Ausführungsform weist das System ein Prüfen des Signals in der Betriebsstelle auf Berechtigung des Absenders auf. Es können an Benutzer Berechtigungen vergeben werden, um einen Zugriffsschutz bereitzustellen. Vorzugsweise weisen eine Sendeeinrichtung und/oder eine Empfangseinrichtung einen Zugriffsschutz auf, insbesondere mit gesicherten Benutzer-Berechtigungsabfragen.

Zur Absicherung gegen unbefugten Zugriff können die mobilen externen Sendeeinrichtungen bei der Empfangseinrichtung registriert werden.

In einer nächsten Ausführungsvariante des erfindungsgemäßen Systems ist die Empfangseinrichtung an der Strecke angeordnet.

Besonders bevorzugt ist ein System, in dem entlang der Strecke mehrere Empfangseinrichtungen angeordnet sind. Eine oder mehrere der der Empfangseinrichtungen können vorzugsweise einem Streckenabschnitt zugeordnet sein.

Es ist nicht erforderlich (kann aber vorgesehen sein), dass eine Empfangseinrichtung auch räumlich an einem zugeordneten Streckenabschnitt angeordnet ist.

Weitere Vorteile und Ausgestaltungen der Erfindung ergeben sich aus der nachfolgenden Beschreibung von Ausführungsbeispielen unter Bezugnahme auf die beiliegende Figur. Es zeigt:

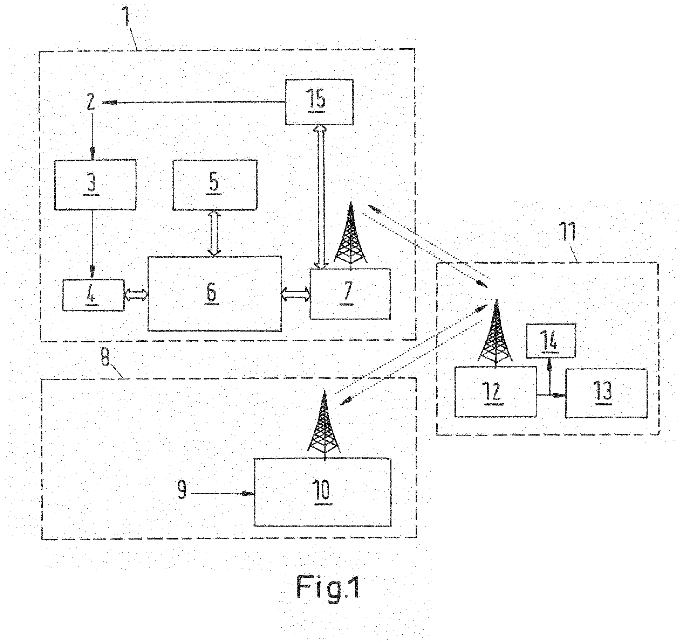

- Fig. 1:: Schematische Darstellung des Verfahrens für die Notabschaltung aus dem Schienenfahrzeug und von einer externen mobilen Sendeeinrichtung

In Figur 1 sind zwei Beispiele für die Notabschaltung der Versorgungsspannung oder Fahrstromversorgung auf einer elektrifizierten Strecke oder einem elektrifizierten Streckenabschnitt schematisch dargestellt. Wenn nachfolgend nur von einer Spannung die Rede ist, kann ebenso die Fahrstromversorgung gemeint sein.

Zum einen ist die Abschaltung aus einem Schienenfahrzeug 1 gezeigt, die Verfahrensschritte innerhalb des Schienenfahrzeugs 1 sind in einem gestrichelten Kasten dargestellt, der das Schienenfahrzeug 1 symbolisieren soll.

Zum anderen sind in einem weiteren gestrichelten Kasten, welcher als Einsatzfahrzeug 8 bezeichnet ist, die Verfahrensschritte in Bezug auf die externe mobile Sendeeinrichtung 10 gezeigt.

Ein weiterer gestrichelter Kasten, als Infrastruktur mit Streckeneinspeisung 11 bezeichnet, zeigt die Verfahrensschritte, die nach dem Absenden des Signals erfolgen und für die Variante der Notabschaltung aus dem Schienenfahrzeug 1 und für die Variante der Notabschaltung von einer externen mobilen Sendeeinrichtung 10 gleich sind.

Bei der Variante der Notabschaltung der Spannung aus dem Schienenfahrzeug 1 betätigt in diesem Beispiel der Fahrzeugführer 2 ein Bedienelement 3, hier einen Taster, der mit einer Schutzabdeckung versehen ist. Der Taster kann eine Beleuchtung aufweisen, die der Zustandsanzeige dienen kann, also ob der Taster betätigt wurde oder nicht.

Daraufhin wird das Signal an das digitale Eingabe/Ausgabemodul 4 gesendet und mit aus dem Signal in der Signalerzeugungseinrichtung 6, hier die Fahrzeugsteuerung (VCU), und mit den GPS Daten aus dem Positionsbestimmungssystem 5 ein Datentelegramm erzeugt, welches Informationen über die Position des Schienenfahrzeugs 1, die Erkennungsdaten des Schienenfahrzeugs 1 und die Identität des Absenders, also hier des Fahrzeugführers 2, enthält. Der Fahrzeugführer ist hier der Bediener. Das zu identifizierende Element ist in diesem Beispiel das Fahrzeug Nummer X auf Linie Y mit dem Fahrer Z.

Dieses Datentelegramm wird über einen Sender 7 per Funk oder GSM zu der Empfangseinrichtung 12 weitergeleitet, die streckenseitig angebracht ist.

Bei der Variante der Notabschaltung der Spannung von einer externen mobilen Sendeeinrichtung 10, beispielsweise aus einem Einsatzfahrzeug 8 der Feuerwehr, Polizei, weiterer Rettungskräfte oder des Wartungspersonals wird die mobile externe Sendeeinrichtung 10, welche in diesem Beispiel ein GSM-Mobilfunkgerät mit GPS Empfänger und Remote-Abschalt Applikation darstellt, von einem Mitglied der Rettungskräfte oder des Wartungspersonals 9 manuell aktiviert.
Das Signal wird per Funk oder GSM zu der Empfangseinrichtung 12 weitergeleitet.

Durch die Empfangseinrichtung 12 wird das Signal an die Betriebsstelle 14 übermittelt, sodass der Fahrdienstleiter informiert werden kann, und es wird von dort über den Streckenhauptschalter 13 die Spannung auf der Strecke oder dem Streckenabschnitt abgeschaltet. In einer vorteilhaften Variante der Erfindung ist eine automatisierte Abschaltung vorgesehen. Sofern die Steuerung der Stromversorgung mit Einrichtungen erfolgt, die auch für die manuelle Bedienung vorgesehen oder geeignet sind, beispielsweise mit einem Streckenhauptschalter 13, der per Hand bedienenbar ist, kann für eine Automatisierung der Abschaltung eine elektrische Steuerung der Schaltvorgänge der Streckeneinspeisung vorgesehen werden. Es kann dazu ein Streckenhauptschalter 13 mit einer elektrischen Steuerung angesteuert werden, die auch als Streckenhauptschaltersteuerung (in den Figuren nicht gezeigt) bezeichnet wird. Statt eines Streckenhauptschalters 13, der auch manuell bedienenbar sein kann, kann eine anderweitige Art der Abschaltung vorgesehen sein, die nicht mehr manuell bedienenbar ist.

Im Anschluss daran wird ein Signal an den Sender 7 des Schienenfahrzeugs oder die externe mobile Sendeeinrichtung 10 zurückgesendet, mit der Information, dass die Strecke spannungslos geschaltet ist. Hierfür ist eine Zustandsanzeige 15 vorgesehen, vorzugsweise als Anzeige am Bedienpult, damit der Bediener die Information über den Zustand der Spannung oder des Fahrstroms erhält.

Im Falle der Notabschaltung aus dem Schienenfahrzeug 1 weiß der Fahrzeugführer 2 durch diese Rückinformation, dass keine Gefahr mehr ausgehend von der Oberleitung besteht.

Bei der Variante der Abschaltung aus einem Einsatzfahrzeug 8 oder durch mobile Rettungskräfte oder Wartungspersonal 9, sind diese informiert, dass mit Rettungs- oder Wartungsmaßnahmen ohne Gefährdung begonnen werden kann bzw. nächste Schritte eingeleitet werden können.

### Bezugszeichenliste

1 - Schienenfahrzeug
2 - Fahrzeugführer
3 - Bedienelement
4 - Analog-Digital-Wandler
5 - Positionsbestimmungssystem
6 - Signalerzeugungseinrichtung
7 - Sender
8 - Einsatzfahrzeug
9 - Rettungskräfte, Wartungspersonal
10 - externe mobile Sendeeinrichtung
11 - Infrastruktur mit Streckeneinspeisung
12 - Empfangseinrichtung
13 - Streckenhauptschalter
14 - Betriebsstelle
15 - Zustandsanzeige Spannung

## Patentansprüche

1. Verfahren zur Notabschaltung einer Versorgungsspannung oder Fahrstromversorgung auf einer elektrifizierten Strecke oder einem elektrifizierten Streckenabschnitt für Schienenfahrzeuge (1), aufweisend die Schritte:
- Senden eines Signals von einem auf der Strecke befindlichen Schienenfahrzeug (1) oder von einer externen, mobilen Sendeeinrichtung (10) an eine Empfangseinrichtung (12),
wobei das Signal eine Information zur erwünschten Abschaltung der Versorgungsspannung oder Fahrstromversorgung auf der Strecke oder einem Streckenabschnitt,
eine Information über den Absender und
eine Information über die aktuelle Position des Schienenfahrzeugs (1) oder der mobilen Sendeeinrichtung (10) enthält,
- Übermitteln des Signals von der Empfangseinrichtung (12) an eine Betriebsstelle (14),
- Abschalten der Versorgungsspannung oder Fahrstromversorgung auf der Strecke oder dem Streckenabschnitt in der Betriebsstelle (14).

2. Verfahren nach Anspruch 1, wobei das Schienenfahrzeug (1) aufweist:
- ein Bedienelement (3) für ein Fahrpersonal des Schienenfahrzeugs (1),
- eine Signalerzeugungseinrichtung (6), die mit dem Bedienelement (3) gekoppelt ist,
und das Verfahren weiterhin aufweist:
- Betätigen des Bedienelements (3) und Erzeugen des Signals in der Signalerzeugungseinrichtung (6).

3. Verfahren nach Anspruch 1 oder 2, wobei die mobile Sendeeinrichtung (10) eine Computerprogrammapplikation aufweist, und das Verfahren weiterhin aufweist:
- Betätigen der Computerprogrammapplikation und Erzeugen des Signals durch die Computerprogrammapplikation.

4. Verfahren nach einem der vorangehenden Ansprüche, aufweisend:
- Prüfen des Signals in der Betriebsstelle (14) auf Berechtigung des Absenders.

5. Verfahren nach einem der vorangehenden Ansprüche, aufweisend:
- Senden eines Bestätigungssignals von der Betriebsstelle (14) an den Absender, das eine Information zu der Abschaltung der Versorgungsspannung oder Fahrstromversorgung enthält.

6. Verfahren nach einem der vorangehenden Ansprüche, aufweisend:
- Senden eines Informationssignals von der Betriebsstelle (14) an zumindest ein weiteres auf der Strecke befindliches Schienenfahrzeug (1), das eine Information zu der Abschaltung der Versorgungsspannung oder Fahrstromversorgung enthält.

7. Verfahren nach einem der vorangehenden Ansprüche, wobei die Empfangseinrichtung (12) an der Strecke angeordnet ist.

8. Verfahren nach einem der vorangehenden Ansprüche, wobei das Abschalten der Versorgungsspannung oder Fahrstromversorgung in der Betriebsstelle (14) automatisiert erfolgt.

9. Schienenfahrzeug (1), aufweisend eine Notsignal-Sendeeinrichtung zur Notabschaltung einer Versorgungsspannung oder Fahrstromversorgung auf einer elektrifizierten Strecke oder einem elektrifizierten Streckenabschnitt für das Schienenfahrzeug, wobei die Notsignal-Sendeeinrichtung aufweist:
- ein Bedienelement (3) für ein Fahrpersonal des Schienenfahrzeugs (1),
- eine Signalerzeugungseinrichtung (6), die mit dem Bedienelement (3) gekoppelt ist und dazu eingerichtet ist, bei Betätigung des Bedienelements (3) ein Signal zu erzeugen, das eine Information zur erwünschten Abschaltung der Versorgungsspannung oder Fahrstromversorgung auf der Strecke oder dem Streckenabschnitt, und
eine Information über den Absender enthält,
- eine Sendeeinrichtung (7), die dazu eingerichtet ist, ein Signal aus der Signalerzeugungseinrichtung (6) von dem Schienenfahrzeug aus zu versenden.

10. Schienenfahrzeug (1) nach Anspruch 9, wobei das Signal eine Information über die aktuelle Position des Schienenfahrzeugs (1) enthält.

11. System zur Notabschaltung einer Versorgungsspannung oder Fahrstromversorgung auf einer elektrifizierten Strecke oder einem elektrifizierten Streckenabschnitt für Schienenfahrzeuge (1), aufweisend
- ein Schienenfahrzeug (1) nach Anspruch 9 oder 10, oder eine Schienenfahrzeug-externe, mobile Sendeeinrichtung (10), die dazu eingerichtet ist, ein Signal zu erzeugen, das eine Information zur erwünschten Abschaltung der Versorgungsspannung oder Fahrstromversorgung auf der Strecke oder dem Streckenabschnitt, eine Information über den Absender und eine Information über die aktuelle Position der mobilen Sendeeinrichtung (10) enthält,
- zumindest eine Empfangseinrichtung (12), von der das Signal empfangbar und an eine Betriebsstelle (14) weiterleitbar ist.

12. System nach Anspruch 11, wobei die zumindest eine Empfangseinrichtung (12) an der Strecke angeordnet ist.

13. System nach Anspruch 12, wobei entlang der Strecke mehrere Empfangseinrichtungen (12) angeordnet sind, wobei jede der Empfangseinrichtungen (12) einem Streckenabschnitt zugeordnet ist.

## Claims

1. A method for emergency shutdown of a supply voltage or traction power supply on an electrified line or an electrified line section for rail vehicles (1), comprising the steps of:
- transmitting a signal from a rail vehicle (1) located on the line or from an external, mobile transmitting device (10) to a receiving device (12),
the signal containing information regarding the desirable shutdown of the supply voltage or traction power supply on the line or a line section,
information about the sender, and information about the current position of the rail vehicle (1) or the mobile transmitting device (10),
- transmitting the signal from the receiving device (12) to an operating location (14),
- shutting down the supply voltage or traction power supply on the line or the line section at the operating location (14).

2. The method according to claim 1, wherein the rail vehicle (1) comprises:
- an operating element (3) for a crew member of the rail vehicle (1),
- a signal-generating device (6), which is coupled to the operating element (3),
and the method also comprises the step of:
- actuating the operating element (3) and generating the signal in the signal-generating device (6).

3. The method according to claim 1 or 2, wherein the mobile transmitting device (10) has a computer program application and the method also comprises the step of:
- actuating the computer program application and generating the signal by the computer program application.

4. The method according to any one of the preceding claims, comprising the step of:
- checking the signal at the operating location (14) to confirm the authorisation of the sender.

5. The method according to any one of the preceding claims, comprising the step of:
- sending a confirmation signal from the operating location (14) to the sender, said signal containing information regarding the shutdown of the supply voltage or traction power supply.

6. The method according to any one of the preceding claims, comprising the step of:
- sending an information signal from the operating location (14) to at least one further rail vehicle (1) situated on the line, said signal containing information regarding the shutdown of the supply voltage or traction power supply.

7. The method according to any one of the preceding claims, wherein the receiving device (12) is arranged on the line.

8. The method according to any one of the preceding claims, wherein the supply voltage or traction power supply is shut down automatedly at the operating location (14).

9. A rail vehicle (1), comprising an emergency signal transmitting device for emergency shutdown of a supply voltage or traction power supply on an electrified line or an electrified line section for the rail vehicle, wherein the emergency signal transmitting device comprises:
- an operating element (3) for a crew member of the rail vehicle (1),
- a signal-generating device (6), which is coupled to the operating element (3) and is designed, in the event that the operating element (3) is actuated, to generate a signal containing information regarding the desired shutdown of the supply voltage or traction power supply on the line or the line section and
information about the sender,
- a transmitting device (7), which is designed to send a signal from the signal-generating device (6) from the rail vehicle.

10. The rail vehicle (1) according to claim 9, wherein the signal contains information about the current position of the rail vehicle (1).

11. A system for emergency shutdown of a supply voltage or traction power supply on an electrified line or an electrified line section for rail vehicles (1), comprising:
- a rail vehicle (1) according to claim 9 or 10, or a mobile transmitting device (10), which is arranged externally of the rail vehicle and which is designed to generate a signal containing information regarding the desired shutdown of the supply voltage or traction power supply on the line or the line section, information about the sender, and information about the current position of the mobile transmitting device (10),
- at least one receiving device (12), by which the signal may be received and by which the signal may be forwarded to an operating location (14).

12. The system according to claim 11, wherein the receiving device (12) is arranged on the line.

13. The system according to claim 12, wherein a plurality of receiving devices (12) are arranged along the line, with each of the receiving devices (12) being assigned to a line section.

## Revendications

1. Procédé de coupure d'urgence d'une tension d'alimentation ou d'une alimentation en courant de traction sur une ligne électrifiée ou un tronçon de ligne électrifié pour des véhicules sur rails (1), présentant les étapes :
- d'envoi d'un signal par un véhicule sur rail (1) se trouvant sur la ligne ou par un dispositif d'envoi (10) mobile externe à un dispositif de réception (12),
dans lequel le signal contient une information de coupure souhaitée de la tension d'alimentation ou de l'alimentation en courant de traction sur la ligne ou sur un tronçon de ligne,
une information portant sur l'expéditeur, et
une information portant sur la position actuelle du véhicule sur rails (1) ou du dispositif d'envoi (10) mobile,
- de transmission du signal par le dispositif de réception (12) à une unité opérationnelle (14),
- de coupure de la tension d'alimentation ou de l'alimentation en courant de traction sur la ligne ou le tronçon de ligne dans l'unité opérationnelle (14).

2. Procédé selon la revendication 1, dans lequel le véhicule sur rails (1) présente :
- un élément d'utilisation (3) pour un conducteur du véhicule sur rails (1),
- un dispositif de génération de signal (6), qui est couplé à l'élément d'utilisation (3),
et le procédé présente en outre :
- l'actionnement de l'élément d'utilisation (3) et la génération du signal dans le dispositif de génération de signal (6).

3. Procédé selon la revendication 1 ou 2, dans lequel le dispositif d'envoi (10) mobile présente une application de programme informatique, et le procédé présente en outre :
- l'actionnement de l'application de programme informatique et la génération du signal par l'application de programme informatique.

4. Procédé selon l'une quelconque des revendications précédentes, présentant :
- le contrôle de l'autorisation de l'expéditeur du signal dans l'unité opérationnelle (14).

5. Procédé selon l'une quelconque des revendications précédentes, présentant :
- l'envoi d'un signal de confirmation par l'unité opérationnelle (14) à l'expéditeur, qui contient une information de coupure de la tension d'alimentation ou de l'alimentation en courant de traction.

6. Procédé selon l'une quelconque des revendications précédentes, présentant :
- l'envoi d'un signal d'information par l'unité opérationnelle (14) à au moins un autre véhicule sur rails (1) se trouvant sur la ligne, qui contient une information de coupure de la tension d'alimentation ou de l'alimentation en courant de traction.

7. Procédé selon l'une quelconque des revendications précédentes, dans lequel le dispositif de réception (12) est disposé au niveau de la ligne.

8. Procédé selon l'une quelconque des revendications précédentes, dans lequel la coupure de la tension d'alimentation ou de l'alimentation en courant de traction est effectuée de manière automatisée dans l'unité opérationnelle (14).

9. Véhicule sur rails (1), présentant un dispositif d'envoi de signal d'urgence pour la coupure d'urgence d'une tension d'alimentation ou d'une alimentation en courant de traction sur une ligne électrifiée ou un tronçon de ligne électrifié pour le véhicule sur rails, dans lequel le dispositif d'envoi de signal d'urgence présente :
- un élément d'utilisation (3) pour un conducteur du véhicule sur rails (1),
- un dispositif de générations de signal (6), qui est couplé à l'élément d'utilisation (3) et est mis au point pour générer lors de l'actionnement de l'élément d'utilisation (3) un signal, qui contient une information de coupure souhaitée de la tension d'alimentation ou de l'alimentation en courant de traction sur la ligne ou le tronçon de ligne, et
une information portant sur l'expéditeur,
- un dispositif d'envoi (7), qui est mis au point pour expédier un signal issu du dispositif de génération de signal (6) depuis le véhicule sur rails.

10. Véhicule sur rails (1) selon la revendication 9, dans lequel le signal contient une information portant sur la position actuelle du véhicule sur rails (1).

11. Système de coupure d'urgence d'une tension d'alimentation ou d'une alimentation en courant de traction sur une ligne électrifiée ou un tronçon de ligne électrifié pour des véhicules sur rails (1), présentant
- un véhicule sur rails (1) selon la revendication 9 ou 10, ou un dispositif d'envoi (10) mobile externe au véhicule sur rails, qui est mis au point pour générer un signal, qui contient une information de coupure souhaitée de la tension d'alimentation ou de l'alimentation en courant de traction sur la ligne ou le tronçon de ligne, une information portant sur l'expéditeur et une information portant sur la position actuelle du dispositif d'envoi (10) mobile,
- au moins un dispositif de réception (12), par lequel le signal peut être reçu et peut être transféré à une unité opérationnelle (14).

12. Système selon la revendication 11, dans lequel le dispositif de réception (12) est disposé au niveau de la ligne.

13. Système selon la revendication 12, dans lequel plusieurs dispositifs de réception (12) sont disposés le long de la ligne, dans lequel chacun des dispositifs de réception (12) est associé à un tronçon de ligne.
